# EUROPEAN PATENT APPLICATION

(11) **EP 2 933 919 A1**
(43) Date of publication of application: **21.10.2015**
(21) Application number: 14164555.6
(22) Date of filing: 14.04.2014
(51) Int. Cl.: H03F 1/30, G01N 30/66, G01N 30/86

(54) **Thermal conductivity detector circuit and method for operating the same**

(71) Applicant: Siemens Aktiengesellschaft, 80333 München (DE)
(72) Inventor: Gellert, Udo, 76756 Bellheim (DE); Schmidt, Glen Eugene, Bartlesville 74003 (US); Wang, Aosheng, Eden Prairies 55344 (US)

(57) **Abstract**

A thermal conductivity detector (5) comprises:
a measuring cell (7) through which a sample fluid in a reference carrier fluid stream flows and which contains a detector element for generating a detector signal (11),
an amplifier (12) for amplifying the detector signal (11),
a subtracting means (13) for generating a difference signal (14) from the amplified detector signal (15) and a reference signal (16), and
a signal processing means (17, 18) for digitizing and processing the difference signal (14).

To improve the thermal conductivity detector for use in gas chromatography without the need of an additional reference cell, it further comprises a reference signal generating means (19) controllable to generate the reference signal (16) from the amplified detector signal (15) or a signal derived from it in the form of a fixed analog reference value (21) at a given time when solely the reference carrier fluid passes the measuring cell (7).

## Description

The present invention relates to a thermal conductivity detector comprising
a measuring cell to be passed through by a sample fluid in a reference carrier fluid stream, the measuring cell containing at least one thermal conductivity detector element and providing a detector signal,
an amplifier for amplifying the detector signal,
a subtracting means for generating a difference signal from the amplified detector signal and a reference signal, and
a signal processing means for digitizing and processing the difference signal to determine presence and amount of the sample fluid.

Such a thermal conductivity detector is known from, e.g., Fig. 2 of US 2008/0291966 A1.

Thermal conductivity detectors are used to detect certain liquid or gaseous substances (fluids) on the basis of their characteristic thermal conductivity, particularly in gas chromatography. There, components or substances of a gas mixture are separated by passing a sample of the gas mixture in a carrier gas (mobile phase) through a separation column containing a stationary phase. The different components interact with the stationary phase which causes each component to elute at a different time, known as the retention time of the component. The separated substances are detected by a thermal conductivity detector which has a measuring cell with an appropriate detector element, e.g. an electrically heated filament disposed in a measurement channel. Depending on the thermal conductivity of the substance flowing past the heated filament, more or less heat is diverted from the heating filament to the wall of the measurement channel, and the heating filament is correspondingly cooled to a greater or lesser degree. As a result of the cooling of the heating filament, its electrical resistance changes, which is detected.

For this purpose, the heating filament may be disposed in a measuring bridge, which contains additional resistors and an additional heating filament in a reference channel through which a reference fluid flows (e.g. US 5,756,878, Fig. 8). The thermal conductivity of the substance passing the heating filament is obtained from an amount of energy which is supplied to the measuring bridge and is controlled to maintain the temperature of the heating filament at a predetermined temperature. Instead of the resistors, further filaments may be provided which are fluidically parallel or in series with the filaments in the measurement channel and the reference channel, respectively.

As disclosed in the above-referenced US 2008/0291966 A1, the measuring cell that is passed through by the carrier gas stream with the gas sample may be used together with a reference cell that is passed solely by the carrier gas. The detector signals provided by the respective thermal conductivity detector elements of the measuring and reference cells are amplified and then subtracted from each other to obtain a difference signal that is only representative of the sample. For further digital processing, the difference signal must be digitized with a high resolution of, e.g., 24 bit which corresponds to a dynamic range of 144 dB. Thus, noise and drift characteristics of the difference signal are very important.

A problem with the additional reference cell is that it may have noise, drift and physical response characteristics that do not exactly match or track those of the measuring cell. These characteristics work against the quality of the detector signal from the measuring cell because they may introduce degradation in the difference signal when the reference signal is subtracted from the detector signal. Additionally, chromatography applications can sometimes be limited by the number of reference cells available for measurement. Groups of detector cells are often assigned to one fixed reference cell. Thus, the ability to use any detector without a reference constraint would allow for far greater freedom to the application chemist and would also reduce complexity and costs.

It is therefore an object of the present invention to provide a thermal conductivity detector for use in gas chromatography without the need of an additional reference cell.

It is further an object of the present invention to provide a method for operating a thermal conductivity detector without the need of an additional reference cell.

According to the invention, this object is achieved by the thermal conductivity detector defined in claim 1 or the method of claim 8.

Preferable embodiments of the thermal conductivity detector or method according to the invention are set forth in the subclaims.

Thus, subject of the invention is a thermal conductivity detector comprising:
a measuring cell to be passed through by a sample fluid in a reference carrier fluid stream, the measuring cell containing at least one thermal conductivity detector element and
providing a detector signal,
an amplifier for amplifying the detector signal,
a subtracting means for generating a difference signal from the amplified detector signal and a reference signal,
a signal processing means for digitizing and processing the difference signal to determine presence and amount of the sample fluid, and
a reference signal generating means controllable to generate the reference signal from the amplified detector signal or a signal derived from it in the form of a fixed analog reference value at a given time when solely the reference carrier fluid passes the measuring cell and to provide the fixed analog reference value to the subtracting means.

The subject of invention is also a method for operating a thermal conductivity detector comprising:
passing a sample fluid in a reference carrier fluid stream through a measuring cell and generating a detector signal by means of a thermal conductivity detector element,
amplifying the detector signal,
generating a difference signal from the amplified detector signal and a reference signal to determine presence and amount of the sample fluid,
digitizing and processing the difference signal,
the method further comprising, as an initial step, generating the reference signal from the amplified detector signal or a signal derived from it in the form of a fixed analog reference value at a given time when solely the reference carrier fluid passes the measuring cell and providing the fixed analog reference value to the subtracting means.

Thus, as the reference signal is generated from the amplified detector signal or a signal derived from it at a time when solely the reference carrier fluid passes the measuring cell, it is only representative of the reference carrier fluid. The reference signal is held to a fixed value which is subtracted from the amplified detector signal provided when the sample fluid in a reference carrier fluid stream passes through the measuring cell. The terms "amplifier" and "subtracting means" referred to are to be understood in a generic sense and also include, e.g., an amplifier of inverting type followed by adding means.

In a very simple embodiment, the reference signal generating means is a sample/hold circuit for sampling and holding the amplified detector signal to obtain the fixed analog reference value. Such a circuit is typically formed by a sampling switch followed by a hold capacitor. When used in a process gas chromatograph, the sampling switch is closed at the start of each or every n-th chromatographic cycle for a short time while solely the reference carrier gas flows through the measuring cell. Thus, the capacitor is charged to the current potential or value of the amplified detector signal. When the switch opens, the capacitor holds this value until the next sampling time and provides it to the subtracting means. The stored value represents a baseline of the chromatogram (amplified detector signal) from which it is subtracted. The timing of the controllable reference signal generating means in general and the sampling switch in particular may be controlled by the signal processing means of the thermal conductivity detector, which means in turn may be controlled by a higher-level control system of a gas chromatograph.

To prevent the capacitor from discharging, a buffer amplifier with high input impedance is preferably arranged between the hold capacitor and the subtracting means. If charge is allowed to leak to or from the hold capacitor, the fixed analog reference value will start to slowly change and there will be a drift of this value or baseline. If this drift is repeatable, a calibration of the thermal conductivity detector can be made to account for this. To this end the signal processing means are preferably adapted to detect and record such a drift during a time interval when solely the reference carrier fluid flows through the measuring cell and to correct the determination of presence and amount of the sample fluid by said recorded drift. The drift may be determined while periodically or non-periodically running an entire chromatographic cycle without the sample gas or fluid present.

With respect to the above, it should be noted that the signals of interest are microvolt signals that exist in a system with as much as 40 volts of common mode signal range, thus achieving 130 to 144 dB of dynamic range with respect to the signal in a well performing system.

In another embodiment of the invention, the reference signal generating means is arranged to provide a feedback from the signal processing means to the subtracting means and is further configured to generate the fixed analog reference value provided to the subtracting means in dependence on the digitized difference signal until the digitized difference signal is at least approximately zero. Here, the reference signal, or more exactly the fixed analog reference value, is not directly derived from the amplified detector signal but from the digitized difference signal. To this end, a digital reference value is generated and converted to an analog reference value which is then subtracted from the amplified detector signal. The digital reference value is adjusted until the difference signal is zero or near zero. The fixed analog reference value finally obtained is used in the same way as described above to eliminate the baseline from the chromatogram (amplified detector signal) from which presence and amount of the sample fluid shall be determined.

As mentioned above, the amplified detector signal should have a high dynamic range of, e.g., 144 dB and therefore must be digitized with a corresponding high resolution of, e.g., 24 bit. Thus, from a simplistic standpoint, the digital-to-analog conversion would be performed at 24 bit resolution, yet practical implementations of digital-to-analog converters are well below 20 bit, more typically 12-16 bit, thus the quantization noise of nominally 100 dB SNR (signal-to-noise ratio) of the digital-to-analog converter is much higher than the 130-140 dB SNR of the digital-to-analog conversion of the difference signal so that 30-40 dB of undesirable noise is brought into the very measurement. This noise can be largely removed by low pass filtering the output of the digital-to-analog converter. As, in practice, the settling time of the filter will far exceed the chromatographic cycle time by many orders of magnitude, the low pass filter is preferably bypassed during the generation of the fixed analog reference value so that the output of the filter is aligned to its input at the time when the chromatographic cycle is started.

As the thermal conductivity detector according to the invention shows its advantages in particular in gas chromatography, a gas chromatograph comprising at least one thermal conductivity detector as described so far is a further subject of the invention.

The invention will now be described by way of example and with reference to the accompanying drawing, in which
- Fig. 1: is a simplified schematic block diagram of an exemplary gas chromatograph having a thermal conductivity detector in accordance with the invention,
- Fig. 2: is a first exemplary embodiment of the thermal conductivity detector according to the invention,
- Fig. 3: is another exemplary embodiment of the thermal conductivity detector and
- Fig. 4: is an exemplary embodiment of a low pass filter as part of the thermal conductivity detector of Fig. 3.

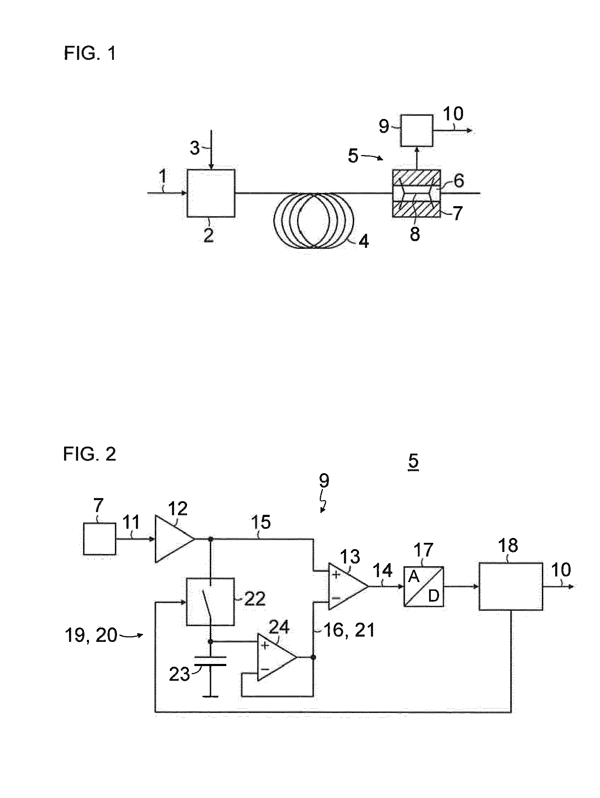

Fig. 1 shows a gas chromatograph in which a carrier gas 1 is delivered to an injector 2, loaded there with a sample of a gas mixture 3 to be analyzed and subsequently introduced into a separation device 4 such as a single separation column or a complete system of separation columns. The separated components or substances of the gas mixture emerging successively from the separation device 4 travel to a thermal conductivity detector 5. There, the separated gas components are conveyed in a measurement channel 6 of a measuring cell 7 past a detector element 8 such as an electrically heated heating filament. Depending on the thermal conductivity of the gas components respectively flowing past in comparison with that of the carrier gas, more or less heat is transferred from the heating filament 8 to the channel wall so that the heating filament 8 is correspondingly cooled or heated. As a result, the electrical resistance of the heating filament 8 changes, which change is detected in an evaluation device 9 of the detector 5. To this end, the heating filament 8 may be arranged in a measurement bridge in a manner known per se (not shown). The evaluation device 9 provides an output 10 that indicates the presence and amount of the gas components passing the heating filament 7.

Fig. 2 shows a first exemplary embodiment of the thermal conductivity detector 5 including the measuring cell 7 and the evaluation device 9. The detector element 8 (Fig. 1) provides a detector signal 11 that is conditioned and amplified by an amplifier 12 before being fed to a subtracting means 13 in the form of a differential amplifier. The subtracting means 13 generates a difference signal 14 from the amplified detector signal 15 and a reference signal 16, which difference signal 14 is digitized by an analog-to-digital converter 17 and further processed in a digital signal processor 18 to generate the output 10 indicating presence and amount of gas components flowing through the measuring cell 7.

The reference signal 16 is generated by a reference signal generating means 19 in the form of a sample/hold circuit 20 for sampling and holding the amplified detector signal 15 to obtain a fixed analog reference value 21 as the reference signal 16. The sample/hold circuit 20 comprises a sampling switch 22 which is controlled by the digital signal processor 18 and, when closed, connects the output of the amplifier 12 to a hold capacitor 23. A buffer amplifier 24 with high input impedance connects the hold capacitor 23 to the subtracting means 13.

The sampling switch 22 is closed at the start of each or every n-th chromatographic cycle for a short time while solely the reference carrier gas 1 flows through the measuring cell 7. Thus, the hold capacitor is charged to the current potential or value 21 of the amplified detector signal 14. When the switch 22 opens, the capacitor holds 23 this value 21 until the next sampling time and provides it to the subtracting means 13. The stored value 21 represents a baseline of the amplified detector signal 14 from which it is subtracted.

Thus, the chromatographic cycle may consist of the following sequence:
1. Wait until previous sample is cleared from the separation device 4 and the tubing to the measuring cell 7, such that only carrier gas 1 is flowing.
2. Close the sampling switch 22.
3. Lock the analog reference value 21 by opening the sampling switch 22.
4. Start chromatographic cycle
5. End of chromatographic cycle
6. Go back to step 1

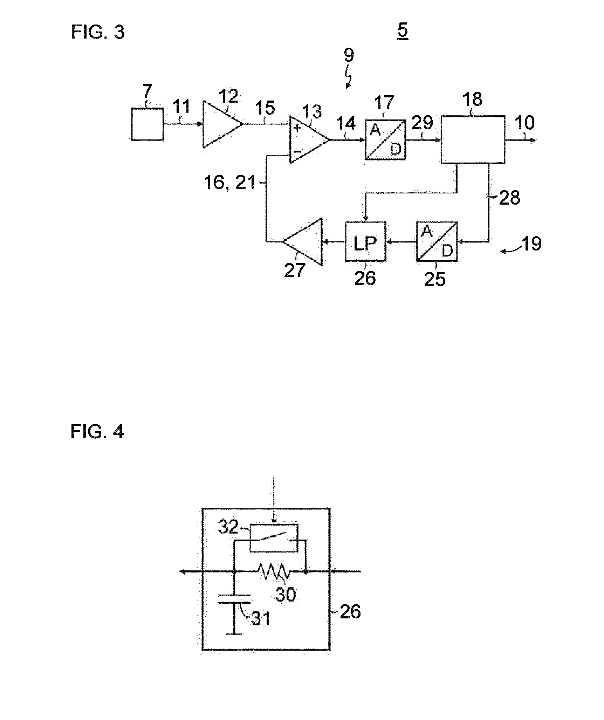

Fig. 3 shows in a simplified block diagram another exemplary embodiment of the thermal conductivity detector 5 which differs from that of Fig. 2 by an alternative version of the reference signal generating means 19. Thus, the thermal conductivity detector 5 includes, just like the detector 5 of Fig. 2, a measuring cell 7 with a detector element for generating a detector signal 11, an amplifier 12 providing an amplified detector signal 15, a subtracting means 13 generating a difference signal 14 from the amplified detector signal 15 and a reference signal 16, an analog-to-digital converter 17 digitizing the difference signal 14, and a digital signal processor 18 processing the digitized difference signal 14 and generating an output 10.

The reference signal generating means 19 provides a feedback from the digital signal processor 18 to the subtracting means 13 and comprises a digital-to-analog converter 25, an analog low pass filter 26 and a buffer amplifier 27. The low pass filter 26 is controllable by the digital signal processor 18 to be bypassed when the reference signal 16 is generated. The reference signal 16 or fixed analog reference value 21 is generated only when solely the reference carrier gas 1 flows through the measuring cell 7. The digital signal processor 18 generates a digital reference value 28 which is converted to the analog reference value 21 by the digital-to-analog converter 25. The analog reference value 21 is provided by the buffer amplifier 27 to the subtracting means 13, where it is subtracted from the amplified detector signal 15. The digital signal processor 18 adjusts the digital reference value 28 until the digitized difference signal 29 received from the analog-to-digital converter 17 is zero or near zero. The adjustment can be made in the digital signal processor 18 or in the digital-to-analog converter 25. The fixed analog reference value 21 finally obtained is used in the same way as described with reference to Fig. 2 to eliminate the baseline from the chromatogram (amplified detector signal 15) from which presence and amount of the sample fluid shall be determined. Due to bypassing the low pass filter 26 its output is aligned to its input at the time when a chromatographic cycle is started. The bypass is released during the chromatographic cycle so that the low pass filter 26 comes into effect. The low pass filter 26 has to be designed with a sufficiently large time constant to effectively eliminate the noise of the digital-to-analog conversion. Thus, the settling time of the filter will far exceed the chromatographic cycle.

Fig. 4 shows a simple example of the low-pass filter 26 in the form of an RC filter comprising a series resistance 30 and a parallel capacitance 31. The resistance 30 is in parallel with a bypass switch 32 that is controlled by the digital signal processor 18.

It should be noted in this context that the bypass switch 32 or, more generally, the bypass means may not necessarily short-circuit the input and output of the low-pass filter 26. Bypassing should be understood to make the filter temporarily ineffective in terms of its large time constant, which also includes reducing the time constant to a significantly lower value. Furthermore, the digital-to-analog converter 25 may be realized in the broadest sense, from a monolithic D/A converter to a digital potentiometer, high frequency filtered PWM circuit or as a few electronic switches with a resistor array, the later being probably the lowest noise solution.

The chromatographic cycle may consist of the following sequence:
1. Wait until previous sample is cleared from the separation device 4 and the tubing to the measuring cell 7, such that only carrier gas 1 is flowing.
2. Close the bypass switch 32.
3. Adjust the digital-to-analog converter 25 until the digitized difference signal 29 is zero or near zero.
4. Lock the adjustment of the digital-to-analog converter 25.
5. Open the bypass switch 32 thus allowing the low pass filter 26 to be in effect
6. Start chromatographic cycle
7. End of chromatographic cycle
8. Go back to step 1

In the examples illustrated in Fig. 2 and Fig. 4, the buffer amplifier 24 or 27 prevents the capacitor 23 or 31 from being discharged via the subtracting means 13. However, there may be still some leakage effects that can cause a drift of the fixed analog reference value 21. Since a chromatographic cycle may run for many seconds to minutes in length, this could result in a slow and undesirable change in the detector output 10 from start to finish. If this drift is repeatable, a calibration of the thermal conductivity detector 5 can be made to account for this. To this end it is provided to periodically or non-periodically run an entire chromatographic cycle without the sample gas or fluid present and to detect and record the drift by the signal processor 18. The recorded drift is used to correct the digitized difference signal 29 received by the signal processor 18 during a normal chromatographic cycle.

## Claims

1. A thermal conductivity detector (5) comprising:
a measuring cell (7) to be passed through by a sample fluid in a reference carrier fluid stream (1), the measuring cell (7) containing at least one thermal conductivity detector element (8) and providing a detector signal (11),
an amplifier (12) for amplifying the detector signal (11),
a subtracting means (13) for generating a difference signal (14) from the amplified detector signal (15) and a reference signal (16),
a signal processing means (17, 18) for digitizing and
processing the difference signal (14) to determine presence and amount of the sample fluid, and
a reference signal generating means (19) controllable to generate the reference signal (16) from the amplified detector signal (15) or a signal (14) derived from it in the form of a fixed analog reference value (21) at a given time when solely the reference carrier fluid (1) passes the measuring cell (7) and to provide this fixed analog reference value (21) to the subtracting means (13).

2. The thermal conductivity detector (5) of claim 1, wherein the signal processing means (18) are adapted to detect and record a drift of the fixed analog reference value (21) during a time interval when solely the reference carrier fluid (1) passes the measuring cell (7) and to correct the determination of presence and amount of the sample fluid by said recorded drift.

3. The thermal conductivity detector (5) of claim 1 or 2, wherein the reference signal generating means (19) is a sample/hold circuit (20) for sampling and holding the amplified detector signal (15) to obtain the fixed analog reference value (21).

4. The thermal conductivity detector (5) of claim 3, wherein the sample/hold circuit (20) comprises a sampling switch (22) followed by a hold capacitor (23).

5. The thermal conductivity detector (5) of claim 4, wherein the sample/hold circuit further (20) comprises a buffer amplifier (24) arranged between the hold capacitor (23) and the subtracting means (13).

6. The thermal conductivity detector (5) of claim 1 or 2, wherein the reference signal generating means (19) is arranged to provide a feedback from the signal processing means (18) to the subtracting means (13) and is further configured to generate the fixed analog reference value (21) provided to the subtracting means (13) in dependence on the digitized difference signal (29) until the digitized difference signal (29) is at least approximately zero.

7. The thermal conductivity detector (5) of claim 6, wherein the reference signal generating means (19) has a digital-to-analog converter (25), a low pass filter (26) and a bypass switch (32), the digital-to-analog converter (25) providing the fixed analog reference value (21) via the low pass filter (26) to the subtracting means (13) and the low pass filter (26) being bypassed during generation of the fixed analog reference value (21).

8. A method for operating a thermal conductivity detector (5) comprising:
passing a sample fluid in a reference carrier fluid stream (1) through a measuring cell (7) and generating a detector signal (11) by means of a thermal conductivity detector element (8),
amplifying the detector signal (11),
generating a difference signal (14) from the amplified detector signal (15) and a reference signal (16),
digitizing and processing the difference signal (14) to determine presence and amount of the sample fluid,
the method further comprising, as an initial step, generating the reference signal (16) from the amplified detector signal (15) or a signal (14) derived from it in the form of an fixed analog reference value (21) at a given time when solely the reference carrier fluid (1) passes the measuring cell (7) and
providing the fixed analog reference value (21) to the subtracting means (13).

9. The method of claim 8 further comprising:
conducting, during a given time interval, solely the reference carrier fluid (1) through the measuring cell (7) and detecting and recording a drift of the fixed analog reference value (21), and
correcting the determination of presence and amount of the sample fluid by said recorded drift while the sample fluid in the reference carrier fluid stream (1) passes the measuring cell (7).

10. A gas chromatograph comprising at least one thermal conductivity detector (5) of one of the claims 1 to 7.
